# DEMANDE DE BREVET EUROPEEN

(11) **EP 0 717 280 A1**
(43) Date de publication de la demande: **19.06.1996**
(21) Numéro de dépôt: 95402811.4
(22) Date de dépôt: 14.12.1995
(51) Int. Cl.: G01N 27/90

(54) **Capteur pour le contrôle de produits métallurgiques cylindriques conducteurs**

(30) Priorité: 14.12.1994 RO 9402014
(71) Demandeur: INSTITUT DE PHYSIQUE TECHNIQUE, RO-6600 Iassy (RO); UNIMETAL Société Française des Aciers Longs, F-57120 Rombas (FR)
(72) Inventeur: Grimberg, Raimond, 6600 Iassy (RO); Chifan, Sorin-Marian, 6600 - Iassy (RO); Savin, Adriana, 6600 - Iassy (RO); Andreescu, Aurel, 6600 - Iassy (RO)
(74) Mandataire: Ventavoli, Roger

(57) **Abrégé**

Le capteur encerclant du type Emetteur-Récepteur selon l'invention permet la mise en évidence, à l'aide d'un champ magnétique tournant autour du produit à contrôler, des discontinuités superficielles disposées selon les génératrices du produit.

Il se caractérise en ce que ledit champ magnétique tournant est créé par trois paires d'enroulements (2-2', 3-3', 4-4', 5-5', 6-6' et 7-7') disposées sur un tore de ferrite (1). Les extrémités de chaque enroulement sortent du tore en des positions diamétralement opposées l'une (2, 3, 4, 5, 6 et 7) de l'autre (2', 3', 4', 5', 6' et 7'), lesdites extrémités (2, 4, 6 et 2', 4', 6') sortant au voisinage immédiat de celles (3, 5, 7 et 3', 5', 7') de l'enroulement aparié. Les enroulements d'une même paire sont électriquement montés en opposition de phase l'un par rapport à l'autre et l'ensemble formé par une paire d'enroulements (2-2', 3-3') est décalé sur le tore de 120° par rapport aux deux autres paires d'enroulements. La distribution des courants de Foucault induits dans le produit est influencée par la présence de défauts sous forme de discontinuités qui se manifestent par des changements de tension aux bornes (9-9', 10-10') des enroulements montés en opposition formant la partie réceptrice (8) qui entoure le produit à contrôler.

## Description

L'invention se réfère à un capteur pour le contrôle de produits métallurgiques cylindres conducteurs, par exemple des fils, des barres ou des tubes.

Pour le contrôle non-destructif par courants de Foucault de produits ayant une symétrie cylindrique et qui présentent des défauts selon les génératrices, on connaît un capteur tournant du genre précité, de type émission-réception, tel que décrit par exemple dans FR-A-88 00808. Le capteur tourne autour du produit à contrôler à proximité immédiate de sa surface et en tenant compte de la vitesse d'avancement du produit on peut régler la vitesse de rotation du capteur afin d'examiner toute la surface destinée à l'inspection. La construction mécanique du capteur tournant du type précité est cependant compliquée et difficile à réaliser, la transmission du signal électrique du capteur à l'équipement proprement-dit étant peu aisée (Brevet Européen n° 452 443 ou US-P-5 111 142).

On connaît également un capteur encerclant de type différentiel ayant une bonne sensibilité et stabilité thermique, mais qui présente l'inconvénient de ne mettre en évidence que le commencement et la fin des discontinuités constituées par des défauts longs s'étendant selon une génératrice (Brevet Européen n° 449 931).

On connaît également un capteur encerclant de type absolu qui présente une sensibilité réduite et une faible stabilité thermique, mais qui met en évidence la longueur entière de la discontinuité (Brevet Européen n° 463 509).

Le problème que résout la présente invention est la réalisation d'un capteur qui présente une bonne sensibilité et une bonne stabilité thermique, et qui permette la mise en évidence, sur toute sa longueur, d'une discontinuité placée selon une génératrice du produit et une construction mécanique simple, sans problèmes particuliers concernant la transmission du signal électrique.

A cet effet, l'invention a pour objet un capteur encerclant du type Emetteur-Récepteur pour le contrôle des produits métallurgiques cylindriques électro-conducteurs, qui permet la mise en évidence, à l'aide d'un champ magnétique tournant autour du produit à contrôler, des discontinuités superficielles disposées selon les génératrices du produit, caractérisé en ce que ledit champ magnétique tournant est créé par l'addition des champs magnétiques de fuite dûs à une partie Emettrice constituée de trois (ou deux) paires d'enroulements disposés sur un tore de ferrite, les extrémités de chaque enroulement sortant du tore en des positions diamétralement opposées l'une de l'autre, lesdites extrémités sortant au voisinage immédiat de celles de l'enroulement aparié, et les enroulements d'une même paire étant électriquement montés en opposition de phase l'un par rapport à l'autre, l'ensemble formé par une paire d'enroulements étant angulairement décalé sur ledit tore de 120° (respectivement 90°) par rapport aux deux autres (respectivement l'autre) paires d'enroulements, lesdites paires d'enroulements étant alimentées par des courants alternatifs à la même fréquence et déphasés de 120° (90° respectivement) entre eux, et induisant dans le produit à contrôler des courants de Foucault dont la distribution est influencée par la présence de défauts sous forme de discontinuités qui se manifestent par des changements de tension aux bornes des enroulements montés en opposition formant la partie Réceptive qui entoure le produit à contrôler, l'amplitude et la phase de la tension induite dans les enroulements du récepteur étant représentatives de la nature et de l'importance de la discontinuité.

Le capteur selon l'invention représente les avantages suivants :
- il permet la détection des discontinuités de matière selon la génératrice du produit à contrôler, sur toute la longueur de la discontinuité, et qui représentent le cas des défauts les plus courants pour les fils, barres et tubes ;
- il a une bonne stabilité thermique ;
- son rapport signal/bruit est supérieur à celui du capteur absolu qui permet la détection des mêmes types de discontinuités ;
- il représente une construction mécanique beaucoup plus simple que celle du capteur tournant qui permet la détection du même type des discontinuités ;
- il est peu influencé par les vibrations mécaniques du produit à contrôler ;
- il offre une bonne robustesse mécanique et une fiabilité accrue pour un coût de fabrication réduit.

On donne par la suite un exemple de réalisation de l'invention en référence aux figures annexées qui représentent :
- fig. 1 : Vue d'ensemble éclatée du capteur ;

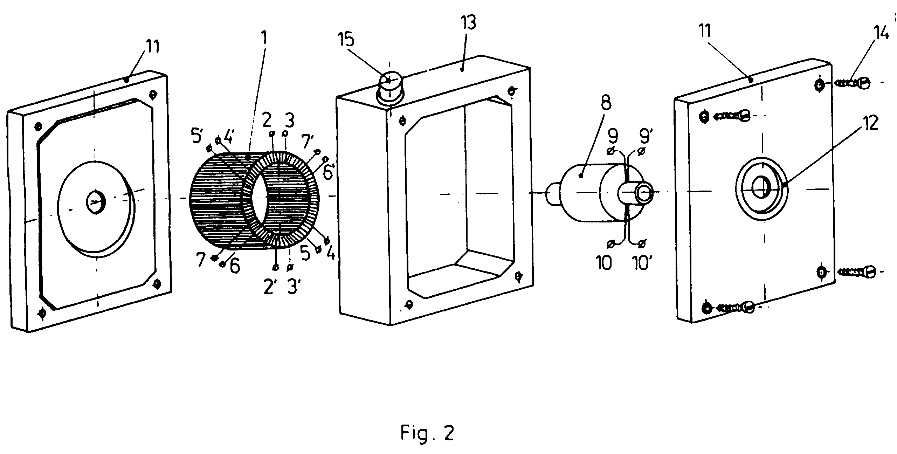

- fig. 2 : Mode de montage du capteur dans sa carcasse ;

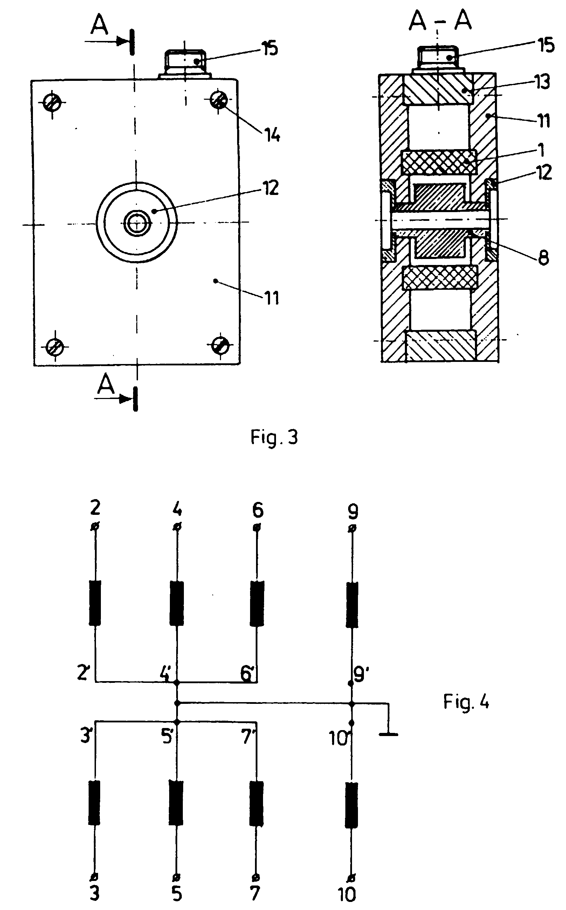

- fig. 3 : Vue de face du capteur (fig. 3a) et en coupe selon le plan A-A' de la fig. 3a (fig.3b) ;
- fig. 4 : Le schéma des connexions électriques du capteur.

Sur les figures, les mêmes éléments sont désignés par des références identiques et chaque enroulement est désigné par les références de ses extrémités d'entrée/sortie.

Le capteur, conformément à l'invention, comprend une partie Emission et une partie Réception.

La partie "Emission" est constituée par un tore de ferrite 1 sur lequel sont disposées trois paires d'enroulements 2-2', 3-3', 4-4', 5-5', 6-6' et 7-7'. Chaque enroulement est enroulé en pas constant sur une moitié de la circonférence du tore de ferrite. Les enroulements constitutifs d'une même paire ont le même sens de bobinage, mais sont bobinés sur des moitiés différentes de la circonférence du tore 1 de manière à être montés en opposition de phase entre eux.

Les extrémités des enroulements constituant les paires sortent au niveau du diamètre du tore qui sépare les enroulements d'une même paire. Pour la deuxième paire 4-4', 5-5', ce diamètre est décalé de 120° par rapport au diamètre de la première paire 2-2', 3-3', tandis que pour la troisième paire 6-6', 7-7', ce diamètre est décalé de 120° par rapport au diamètre de la deuxième paire. Les trois paires d'enroulements sont bobinées sur le tore en couches de spires superposées équidistantes l'une de l'autre.

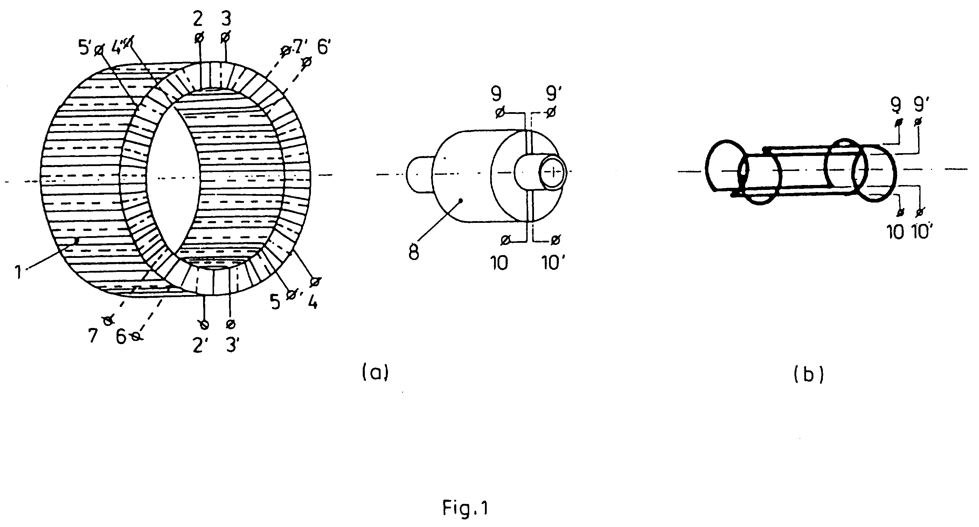

La partie "Réception" est composée d'une carcasse isolatrice 8 ayant un orifice selon l'axe de la carcasse dans lequel passe le produit à contrôler. Sur la carcasse, on a pratiqué deux rainures diamétralement opposées dans lesquelles on a disposé deux enroulements de réception 9-9' et 10-10' selon un mode de bobinage en quinconce clairement représenté par la fig. 1b.

Le tore de ferrite 1 équipé de ses trois paires d'enroulements 2-2', 3-3', 4-4', 5-5', 6-6' et 7-7' de la partie Emettrice, est introduit dans un logement circulaire pratiqué sur les faces internes des parois opposées d'un couvercle 1 1 .

La carcasse 8, sur laquelle on a enroulé les enroulements de réception 9-9' et 10-10', est introduite à son tour, coaxiallement avec le tore 1, dans un passage pratiqué dans la bride de fixation 12. Ensuite, on met en place l'enveloppe externe 13 de la carcasse du capteur contre une paroi du couvercle, puis on rapporte l'autre paroi du couvercle. Le système est fixé à l'aide de quatre vis 14. Les connexions du capteur sont reliées à un manchon d'accouplement 15 assurant les liaisons électriques avec l'extérieur.

Par les extrémités 2-2', 3-3', 4-4', 5-5', 6-6' et 7-7' des enroulements de la partie Emission, on applique aux trois paires d'enroulements trois courants alternatifs de même fréquence et déphasés de 120° entre eux. L'intensité des courants et/ou le nombre des spires des enroulements d'émission seront choisis de sorte que la saturation magnétique locale du tore de ferrite soit assurée.

Grâce à la manière de relier ses extrémités aux bornes de la tension d'alimentation et au sens de l'enroulement, chacune des paires d'enroulements d'émission va ainsi générer une induction magnétique de fuite à l'intérieur du tore ayant une direction selon le diamètre au niveau duquel sortent les extrémités des enroulements. A tout moment, l'addition vectorielle des trois inductions magnétiques de fuite procure un champ magnétique tournant autour du produit à contrôler de même fréquence que les courants alternatifs qui parcourent les enroulements.

Dès lors, si l'on introduit selon l'axe du tore un cylindre électriquement conducteur, par exemple un fil métallurgique, celui-ci sera parcouru par des courants de Foucault distribués sur la surface du fil dans un plan perpendiculaire à tout moment à la direction du champ magnétique incident qui tourne autour de l'axe du tore. Au cours de la rotation de ce champ magnétique, l'entière surface latérale du fil est ainsi balayée.

La tension électrique induite aux bornes des deux enroulements de réception 9-9' et 10-10', qui est théoriquement nulle, ne l'est pas tout à fait en pratique en raison des imperfections d'enroulement et à l'irrégularité inévitable du champ magnétique tournant. Cette tension résiduelle a la même fréquence que les courants qui parcourent les enroulements d'émission.

Si le corps cylindrique introduit dans le capteur contient une discontinuité à la surface, ou à sa proximité, orientée longitudinalement selon une génératrice, la distribution des courants de Foucault se modifie et une différence de tension apparaît aux extrémités des enroulements de réception. Cette différence de tension peut être traitée électroniquement d'une manière convenable pour obtenir, selon son amplitude et sa phase, des informations sur l'existence et l'importance de la discontinuité, qui en général est qualifiée de défauts sur un produit métallurgique tel que fil, barre, cylindre si elle dépasse un certain seuil préétabli par l'utilisateur.

L'invention qui vient d'être décrite n'est bien entendu pas limitée à l'exemple donné, mais s'entend à de nombreuses variantes dans la mesure où sont respectées les caractéristiques définies dans les revendications jointes.

En particulier, le champ tournant peut être généré par un capteur selon l'invention qui, au lieu d'être triphasé comme dans l'exemple décrit, est biphasé.

## Revendications

1. Capteur encerclant (1) du type Emetteur-Récepteur pour le contrôle des produits métallurgiques cylindriques électro-conducteurs, par la mise en évidence, à l'aide d'un champ magnétique tournant autour du produit à contrôler, des discontinuités superficielles disposées selon les génératrices du produit, caractérisé en ce que ledit champ magnétique tournant est créé par l'addition des champs magnétiques de fuite dûs à une partie Emettrice constituée de trois paires d'enroulements disposés sur un tore de ferrite (1), les extrémités de chaque enroulement (2-2', 3-3', 4-4', 5-5', 6-6' et 7-7') sortant du tore en des positions diamétralement opposées l'une (2, 3, 4, 5, 6 et 7) de l'autre (2', 3', 4', 5', 6' et 7'), lesdites extrémités (2, 4, 6 et 2', 4', 6') sortant au voisinage immédiat de celles (3, 5,7 et 3', 5', 7') de l'enroulement aparié, et les enroulements d'une même paire étant électriquement montés en opposition de phase l'un par rapport à l'autre, l'ensemble formé par une paire d'enroulements (2,-2', 3-3') étant angulairement décalé sur ledit tore de 120° (respectivement 90°) par rapport aux deux autres (respectivement l'autre) paires d'enroulements (4-4', 5-5' et 6-6', 7-7'), lesdites paires d'enroulements étant alimentées par des courants alternatifs à la même fréquence et déphasés de 120° (90° respectivement) entre eux, et induisant dans le produit à contrôler des courants de Foucault dont la distribution est influencée par la présence de défauts sous forme de discontinuités qui se manifestent par des changements de tension aux bornes (9-9', 10-10') des enroulements montés en opposition formant la partie Réceptrice (8) qui entoure le produit à contrôler, l'amplitude et la phase de la tension induite dans les enroulements du récepteur étant représentatives de la nature et de l'importance de la discontinuité.
